(19) Europäisches Patentamt
European Patent Office
Office européen des brevets

(11) **EP 2 951 426 B1**

(12) **EUROPEAN PATENT SPECIFICATION**

(45) Date of publication and mention
of the grant of the patent:
**22.05.2019 Bulletin 2019/21**

(21) Application number: **13873238.3**

(22) Date of filing: **04.02.2013**

(51) Int Cl.:
*F03B 13/10* (2006.01)          *F03B 13/26* (2006.01)
*F03B 15/00* (2006.01)          *F03D 5/00* (2006.01)
*F03B 3/04* (2006.01)          *F03B 17/06* (2006.01)
*H02K 7/18* (2006.01)

(86) International application number:
**PCT/SE2013/050091**

(87) International publication number:
**WO 2014/120058 (07.08.2014 Gazette 2014/32)**

(54) **POWER PLANT COMPRISING A STRUCTURE AND A VEHICLE**

KRAFTWERK MIT EINER STRUKTUR UND EINEM FAHRZEUG

CENTRALE ÉLECTRIQUE COMPRENANT UNE STRUCTURE ET UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.12.2015 Bulletin 2015/50**

(73) Proprietor: **Minesto AB**
**426 71 Västra Frölunda (SE)**

(72) Inventors:
• **MARZELIUS, Olof**
**426 52 Västra Frölunda (SE)**
• **QUAPPEN, Arne**
**412 57 Göteborg (SE)**

(74) Representative: **Zacco Sweden AB**
**P.O. Box 5581**
**114 85 Stockholm (SE)**

(56) References cited:
**EP-A1- 1 816 345          WO-A1-2009/097000
WO-A1-2009/097000          US-A1- 2002 040 948
US-A1- 2007 228 738          US-A1- 2007 228 738
US-A1- 2007 261 624          US-A1- 2009 097 974
US-A1- 2012 104 763**

## Description

TECHNICAL FIELD

The invention relates to a power plant for producing electrical power. The power plant comprises a structure and a vehicle comprising at least one wing. The vehicle is arranged to be secured to the structure by means of at least one tether. The vehicle is arranged to move in a predetermined trajectory by means of a fluid stream passing the wing. The vehicle is arranged to move with a varying speed over the predetermined trajectory.

BACKGROUND ART

A power plant in the form of a vehicle which moves by means of a fluid stream passing over the vehicle is known in the art. The vehicle may be attached to a tether to be secured at a fastening point. The vehicle is then made to move in a trajectory and the kinetic energy in the fluid stream can be converted to electrical energy by suitable means, see for example the document WO 2009/097000.

Due to differences in fluid dynamic forces acting on the vehicle, that the trajectory may lead to changes in velocity or due to varying speeds of flows at different times, the speed of the vehicle has to be limited in order not to exceed structural limitations. This leads to that the speed of the vehicle over different parts of the trajectory is lower than otherwise required, leading to that the energy available in the fluid stream is not utilized in an efficient way.

There is thus a need for an improved power plant which addresses the above mentioned problem.

SUMMARY OF THE INVENTION

The object of the present invention is to provide an inventive arrangement for a power plant comprising a structure and a vehicle where the previously mentioned problem is addressed. This object is achieved by the features of the characterising portion of claim 1. Additional features of the invention are laid out in the accompanying dependent claims.

The present invention relates to a power plant for producing electrical power. The power plant comprises a structure and a vehicle comprising at least one wing. The vehicle is arranged to be secured to the structure by means of at least one tether. The vehicle is arranged to move in a predetermined trajectory by means of a fluid stream passing the wing. The vehicle is arranged to move with a varying speed over the predetermined trajectory. The power plant comprises an element arranged to be attached between the wing and the structure. The element is arranged to change or allow change of the distance between the vehicle and the structure continuously over or during parts of the predetermined trajectory reducing the variation in speed of the vehicle over the predetermined trajectory, and/or allowing power to be generated from the variation in distance between the vehicle and the structure by means of a transducer. The transducer is arranged to be attached to the power plant.

Today, the distance between the vehicle and the structure changes due to that the tether is exposed to various tensile loads over the predetermined trajectory. The variation in tensile loads has a quadratic relation to the speed of the wing and thereby the vehicle. This leads to that the tether exhibits elastic lengthening and contraction over the predetermined trajectory thereby changing the distance between the vehicle and the structure which may be undesirable in some cases and in some points of view.

One advantage with the invention is that the element is arranged to change or to allow change of the distance between the vehicle and the structure continuously over or during parts of the predetermined trajectory. With to allow change means that the element is passive but has predetermined features, such as a spring constant which may be dependent on the properties of the power plant, the site of the power plant and other design features. To change means that the element can be actively controlled so that the distance can be regulated within certain parameters. Both options lead to smoothening of the speed over and/or between different parts of the vehicle's trajectory. Speed is defined as the magnitude of the velocity of the vehicle as it covers the predetermined trajectory.

One way to protect the structural integrity of the vehicle is to limit the speed of the vehicle in parts of the trajectory where there is a risk for the vehicle to move with a speed that exceeds a maximum design speed due to the resulting dynamic forces acting on the wing of the vehicle from the fluid, i.e. during speed peaks where the speed exceeds a maximum design speed. Similarly, in parts of the trajectory, the vehicle moves with a speed lower than necessary due to forces acting on the vehicle from the fluid and the tether, inertia and hydrodynamic and hydrostatic forces. This is referred to as speed dips. This results in that a lower amount of energy can be converted by the turbine than maximally possible. It would be of advantage to decrease the variation of the speed over the entire trajectory by increasing the time for which the speed of the vehicle is limited. This is achieved by the element changing or being allowed to change the distance between the vehicle and the structure.

Structural limitations set on the vehicle are results of optimizations of product cost and total power output over time. The wing may need to be large and efficient enough to extract/convert appropriate energy amounts during times with low flow speeds. The speed of such a relatively large and efficient wing may then need limitations during times with higher speed flows in order not to exceed such optimized structural limitations.

A reduction of the amplitude of the variation of the forces acting on the power plant is advantageous for e.g. material fatigue reasons. For power production reasons, the cubic relationship between speed and produced power needs to be considered. The power production is largely proportional to the integral of the cube of the speed, i.e. the area under the power curve. By lowering speed when high forces are acting on the vehicle towards a certain average speed, the power production would be lowered to the power of three at those parts of the predetermined trajectory. This would in turn cause a quite significant power production loss. Correspondingly, if the speed dips are elevated towards the same certain average speed, the power production increase at those dips would be much less than the power production lost during the lowered peaks. A constant average speed with lowered amplitude of the speed variation would lead to a lowered power production.

With an increased average speed, which may be obtainable if the amplitude of the speed variation is decreased and the speed peaks are kept on the same level, an increased power output could be achieved. This would mean no loss of power at the peaks, but increased power production during all other parts of the speed curve. This is valid for spring tides, when peaks may need to be cut. During neap tides when peaks may not need to be cut power output increase would occur during the entire trajectory.

The speed or force curve may be raised to a higher mean value by means of e.g. a larger wing or by the use of an installation site with higher flow speeds.

A decrease of the speed variation amplitude by using the element to allow a change in the distance between the vehicle and the structure may also facilitate for economically feasible installation on sites with greater variations between neap tides and spring tides than otherwise would be possible if the speed of the vehicle during neap tides can be raised without the peak speeds during spring tides becoming too high.

The use of an element as described above thus leads to a reduction of speed peaks, reduces the amplitude of the speed variations that occur over the predetermined trajectory and reduces variations in system loads. Further, shock loads may be imposed on the system from sudden variations in fluid flow, such as turbulence or wave disturbances. Such shock loads are partly due to tensional stiffness of the tether tensile force carrying members, i.e. a tensionally stiff tether will cause higher shock loads on the vehicle. Such shock loads may also be reduced by the use of an element as described above. In this way, fatigue in different parts of the system can also be reduced. This is accomplished by that the element allows the distance between the vehicle and the structure to change. By increasing the distance between the vehicle and the structure, the speed of the vehicle is reduced during the increase of the distance, in relation to if there was no increase of the distance, due to that the dynamic forces acting on the vehicle are reduced as the vehicle moves in the same direction as the fluid stream. Similarly, reducing the distance between the vehicle and the structure increases the speed of the vehicle during the reduction of the distance, in relation to if there was no increase of the distance, as the dynamic forces acting on the vehicle are increased as the vehicle moves in a direction opposite to the direction of the fluid stream. In other words the glide ratio of the wing which may be seen upon as relatively constant will see to that the speed of the wing in its direction of travel along the trajectory will increase when the wing moves into the water flow due to a decrease of the distance between the wing and the structure so that the relative speed of the water flow hitting the wing increases. Correspondingly, when the wing moves with the water flow and the relative speed of the water flow hitting the wing decreases the speed of the wing in its direction of travel along the trajectory will decrease.

The above allows for using the power plant at sites where the speed of the fluid stream is higher or lower than today since the invention allows for compensation for higher fluid velocities as well as elevation of speeds during speed dips. At a site where the speed of the fluid stream is high the invention allows for better extraction of energy by increasing the time for which the speed of the vehicle is limited. At a site where the speed of the fluid stream is low the invention allows for better extraction of energy as e.g. the size of the wing can be increased. A larger wing allows for better utilization of lower fluid velocities.

The change in distance between the vehicle and the structure due to an applied force (or in this case rather a change of applied force) which then constitutes mechanical work or energy, according to that mechanical work equals force times displacement, may also be used to generate power as the change in distance, equalling a translational movement, may be converted by a transducer into a different form of energy which can for instance be electrical energy.

The transducer may comprise the element being arranged to change or allow change of the distance between the vehicle and the structure continuously over or during parts of the predetermined trajectory. The transducer may be attached to the element being arranged to change or to allow change of the distance between the vehicle and the structure continuously over or during parts of the predetermined trajectory. A combination of the two is also possible, for instance in the case where the element comprises more than one part or when the power plant comprises more than one element. A first part of the element may be attached to the transducer and a second part of the element may be part of the transducer. Similarly a first element may be attached to the transducer and a second element may be part of the transducer. The element may comprise different types of resilient elements, such as a compression spiral spring, compression disk spring stack, elastomeric spring and/or a gas spring. The compression spiral spring or compression disk spring stack may be made of steel or a composite material. The element or the transducer may also comprise an energy storage which may be able to provide energy to the vehicle when the resulting forces acting on the vehicle are not great enough to cause the desired changes in the distance between the vehicle and the structure or the wing and the structure.

The power plant may comprise at least one rotary generator that is connected to a mechanical energy transducer or is a part of a total transducer, where the generator produces electrical power by means of converting a rotational motion from the mechanical transducer caused by the variation in distance between the vehicle and the structure into electrical energy. The rotational motion being output from the transducer to the generation is converted from a linear motion.

The power plant may alternatively or also comprise at least one linear generator which directly converts the variation in distance between the vehicle and the structure into electrical energy and thus also largely constitutes the total transducer. The translational motion on one side of a mechanical transducer may be converted by the mechanical transducer into a rotational motion on the other side which in its turn drives the generator. The transducer may e.g. comprise a hydraulic piston located in a cylinder, where the piston creates a hydraulic pressure which powers a hydraulic motor connected to the generator. The transducer may also drive the generator in a mechanical fashion, e.g. by comprising a winch which drives the generator. The transducer may also comprise a gear or mechanism having a suitable gear ratio, speed ratio or angular speed ratio. The power plant may also comprise a transducer comprising an electric linear generator for producing electrical power by converting the translational mechanical work arising from the variation in distance between the vehicle and the structure into electrical energy. The power plant thus may comprise an electric linear generator, which directly produces electric energy. A power plant producing power only from the linear/translating motion caused by the change in distance between the vehicle and structure can be made much cheaper and lighter as the vehicle of the power plant can be made lighter, thus not needing as much buoyancy volume or thickness. Further a thinner tether can then be allowed due to thinner and lighter weight tether cables through the tether as no electrical energy from the vehicle needs to be transported through the tether. Furthermore power plants producing power only from changes of distance between vehicle and structure may be adaptable to and installed at different sites and at different costs than those power plants where the vehicle comprise a turbine and generator.

The energy storage may comprise a pretensioned feather in the cylinder acting to push and/or pull the piston towards a predetermined position during the speed dips in order to decrease the distance between the wing and the structure or vehicle and structure so that the speed can be increased. Alternatively, electrical energy taken from the power grid, a capacitor or similar may provide energy to the vehicle of the power plant by means of the generator which in this case acts as a motor.

An important property of the element is that the element stores or converts the energy arising from the change in distance with as low losses as possible. This could for instance be a low-loss spring or a transducer/generator designed for low losses. This property gives rise to that energy can be converted as efficiently as possible and/or that as much energy as possible can be stored in order to provide energy during speed dips.

The power plant may comprise at least one turbine and turbine generator arranged to be attached to the vehicle, wherein the turbine generator is arranged to generate electrical power by converting rotational energy converted by the turbine caused by the movement of the vehicle through the fluid in the predetermined trajectory into electrical energy. The presence of a turbine attached to the vehicle leads to the possibility of one means for producing electrical energy as the turbine rotates due to the motion of the vehicle through the fluid. The turbine and turbine generator are connected to means for transporting the energy from the vehicle to the structure and further on to consumers of the energy. The means may for instance be one or more electrical conductors located in the tether connecting the vehicle and the structure.

The power plant may comprise means for controlling the rate of change in distance between the plant and the structure. Depending on the speed of the vehicle over different parts of the trajectory or on a change in the fluid stream's speed, controlling the rate of change in distance between the wing or vehicle and the structure may be desirable.

The tether may comprise the element. Alternatively, the tether comprises more than one element or an element comprising more than one part. Additionally, the element may comprise part of the tether or the whole of the tether. By designing the tether to comprise the whole element or to be a part of the element the problem with undesirable stress on the tether can be at least partly avoided while simultaneously addressing the object of the invention. In this way the tether may be designed to be elastic enough to function as the element in a desired way. The tether may be made of Dyneema® or other artificial fibres, carbon fibres, steel or similar and may thus act as an element in accordance with what is described above.

The power plant may be a submersible power plant arranged to be submersed in a liquid.

BRIEF DESCRIPTION OF THE DRAWINGS

Figure 1 schematically shows a vehicle of a power plant according to the invention;

Figure 2 schematically shows a power plant according to the invention where the vehicle is moving along a predetermined trajectory;

Figure 3 schematically shows an overview of a power plant comprising a transducer and a generator;

Figure 4 schematically shows a vehicle of a power plant comprising a turbine for producing electrical power attached under the wing.

Figure 5 schematically illustrates spring and neap tide examples of the force distribution of the vehicle with and without the use of the element and with use of the element in combination with elevation of the curves.

DETAILED DESCRIPTION

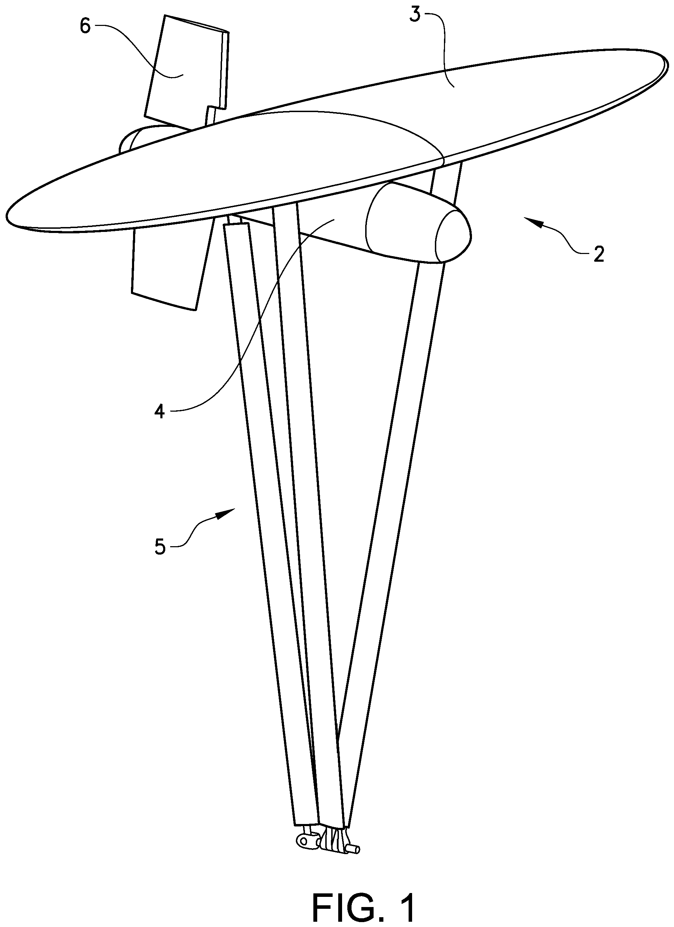

Figure 1 schematically shows a vehicle 2 of a power plant according to the invention. The vehicle 2 comprises a wing 3, at least one nacelle 4, at least one strut 5 and at least one control surface 6. The vehicle 2 may also not be equipped with a nacelle 4 and one or more struts 5 depending on the configuration of the power plant.

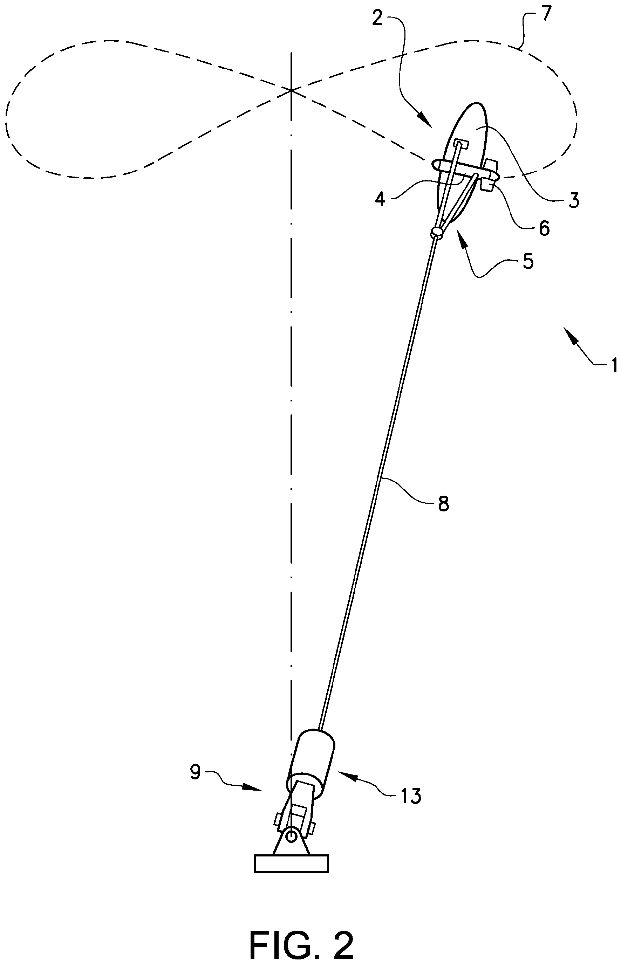

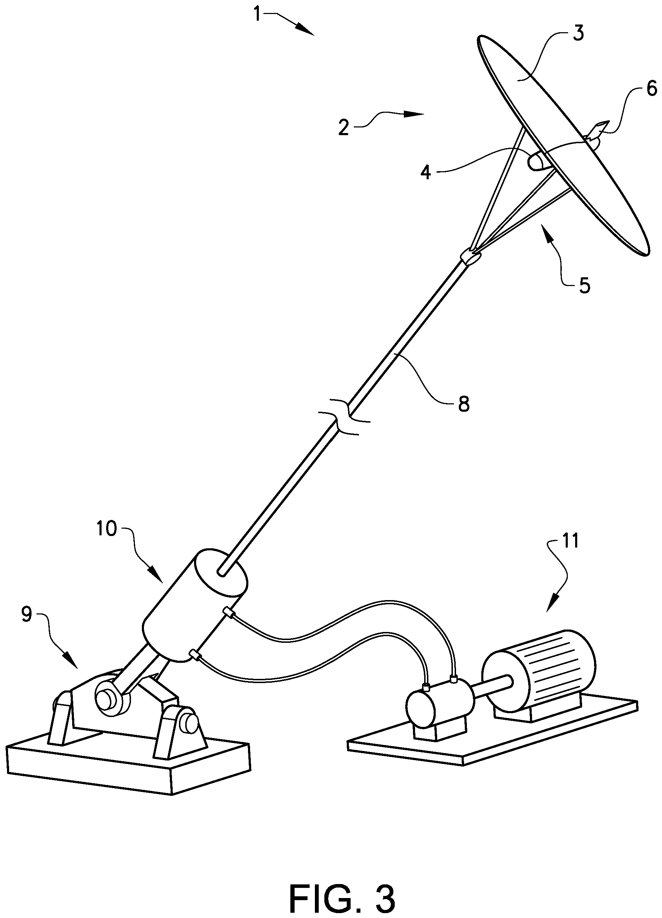

Figure 2 schematically shows a power plant 1 according to the invention where the vehicle 2 is moving along a predetermined trajectory 7. The power plant 1 comprises besides the vehicle 2 described in figure 1 a tether 8 attaching the vehicle 2 to a structure 9. The structure 9 can be positioned on or fastened to a surface such as any ground surface or the bottom of a sea, lake or ocean. The structure 9 may also be positioned above the surface of a sea, lake, river or ocean with the vehicle submerged in the water. The power plant 1 according to the invention can thus be used both on land and submerged under water. The power plant 1 further comprises an element 13 arranged to be attached between the vehicle 2 and the structure 9, or between the wing 3 and the structure 9. The element 13 is arranged to change or allow change of the distance between the vehicle 2 and the structure 9 continuously over or during parts of the predetermined trajectory 7. This allows the power plant 1 to reduce the variation in speed of the vehicle 2 over the predetermined trajectory 7. Alternatively or complementary electrical power can be generated from the variation in distance between the vehicle 2 and the structure 9 by means of a transducer 10 (shown in figure 3) arranged to be attached to or be part of the power plant 1.

The vehicle 2 moves by that a fluid stream moves over the wing 3 of the vehicle 2 and creates a lift force on the wing 3. The fluid stream can for instance be a tidal stream or an ocean current. By using the control surface 6, the vehicle 2 can be made to move along the predetermined trajectory 7. The fluid stream is in figure 2 directed into the figure. The lift force pushes the vehicle 2 forward, essentially transverse the water current direction. As the vehicle 2 moves, the vehicle 2 is steered along the predetermined trajectory 7 by the control surface 6. In figure 2 the vehicle 2 can be seen to move along a predetermined trajectory 7 in the form of a figure-8 which is tilted 90°. The predetermined trajectory 7 may have different forms such as a circle, oval or any other trajectory. The trajectory 7 may be mirrored symmetrically about a vertical axis.

Figure 3 schematically shows an overview of a power plant 1 comprising a transducer 10 and a generator 11. The transducer 10 may be any form of transducer 10 suitable for converting a linear motion to a rotational motion that can be converted to electrical energy by a generator 11. In the shown example, the transducer comprises a hydraulic piston located in a cylinder, where the movement of the vehicle creates a hydraulic pressure in the piston. The hydraulic pressure is transferred from the cylinder through hydraulic piping to a hydraulic motor connected to the generator 11. The hydraulic motor drives the generator such that electric energy is produced. The transducer may also comprise other means to convert a translational motion to a rotational movement. It would e.g. be possible to use a winch with a wire, that drives the generator. It is also possible to integrate a linear generator in the transducer, which directly produces electric energy. In this case, an external generator is superfluous. The electricity produced by the generator is fed to an electricity supply network.

The element 13 that will allow the distance to change between the vehicle 2 and the structure 9 continuously over or during parts of the predetermined trajectory 7 may be a stand-alone component mounted between the vehicle and the structure or it may be integrated with the transducer 10. The transducer may thus function both as an element that allows the distance change and as a means for producing electric energy. It is also possible to mount an element and a transducer in series or in parallel between the structure and the vehicle.

The element is resilient and is arranged to vary the distance between the vehicle 2 and the structure 9 continuously over or during parts of the predetermined trajectory 7. This allows for a reduction in the variation in speed of the vehicle 2 over the predetermined trajectory 7 as described above. It may also or alternatively allow for electrical power to be generated from the variation in distance between the vehicle 2 and the structure 9 by means of the transducer 10 attached to the power plant 1. The element may be one or more of a compression spiral spring, a compression disk spring stack, an elastomer spring or a gas spring or the tether as described above. The element may also be controlled by electrically stored energy which controls for instance a winch or the like. The element may be located inside a housing or may be placed outside a housing and being attached to the housing. In case the element is a compression spiral spring, a compression disk spring stack, an elastomer spring or a gas spring, the element is attached to the tether 8 of the power plant 1 and/or to the transducer 10.

The tether 8 or parts of the tether 8 may alternatively comprise the element 13. In this case the tether 8 comprising the element 13 is directly connected to the transducer 10. The tether 8 may alternatively be attached to a motor and/or a winch where the tether or an extension of the tether can be rolled onto the winch. Thus, depending on the configuration of the power plant the element can be used to change or allow change of the distance between the vehicle and the structure.

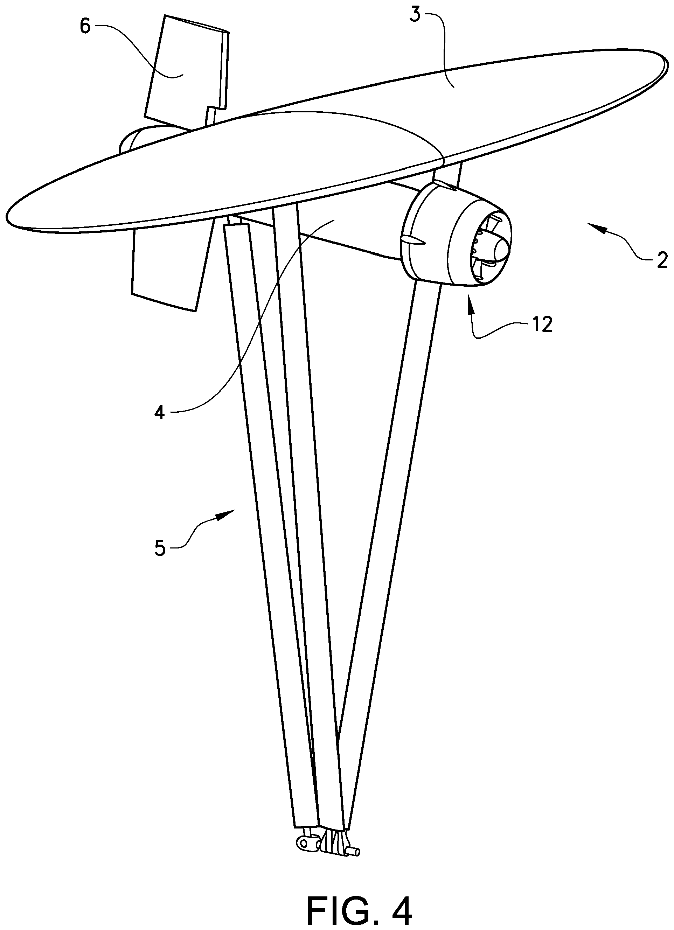

Figure 4 schematically shows a vehicle 2 of a power plant 1 according to the invention comprising a turbine 12 for producing electrical power attached under the wing 3. The power plant 1 according to the invention may comprise a turbine 12 for producing electrical energy from conversion of the energy in the fluid stream to electrical energy as a complement to the energy produced by the transducer 10 and generator 11. The power plant 1 according to the invention may comprise a turbine 12 for producing electrical energy from conversion of the energy in the fluid stream to electrical energy, where the energy output from such a turbine is increased by means of the element as described above. The above description of a vehicle 2 with a turbine 12 may also be applied to the vehicle 2 in figure 2.

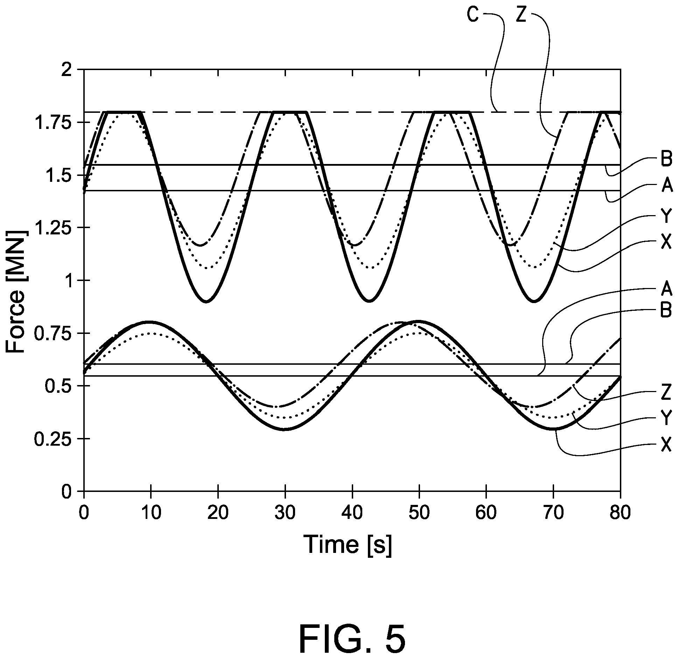

Figure 5 schematically illustrates the force distribution of the vehicle 2 with and without the use of an element arranged to change the distance between the vehicle 2 and the structure 9 continuously over or during parts of the predetermined trajectory 7.

The kinetic energy $E$ of a moving object, in this case the fluid, can be expressed as

$$E = \frac{1}{2}mv^2 \ (1)$$

where $m$ is the mass of the object and $v$ is the speed of the object. Molecules in a fluid have mass, and when they are in motion, they contain kinetic energy that can be converted into other forms of energy. The energy transfer between the fluid and the turbine of the power plant 1, when applicable, can be illustrated as follows.

If $r$ is the radius of the blades of the turbine, the cross-section area $A$ over which they intercept the fluid is

$$A = \pi r^2 \ (2)$$

The mass of fluid $m$ that will pass through the cross section area $A$ in a given time $t$ is

$$m = \rho Avt \ (3)$$

where $\rho$ is the density of the fluid, and $v$ is the speed of the fluid relative to the turbine.

As the vehicle travels through the fluid the kinetic energy of the relative motion of the fluid that passes through the area A in a time t is thus

$$E = \frac{1}{2}\rho\pi r^2 v^3 t \ (4)$$

This cubic relationship between energy and speed means that a small increase in the speed at any moment along a predetermined trajectory 7 gives a large increase in the energy output or power output at that moment. Equation 4 is derived from a body having a circular cross area. Equation 4 is valid also for bodies having different cross section areas A such as the wing 3 of the vehicle 2.

In figure 5, the upper group of curves shows an example of the forces acting on a vehicle during a spring tide and the lower group of curves shows the forces during a neap tide. The continuous lines X show the forces acting on the vehicle without an element, the dotted lines Y show the forces acting on the vehicle with the use of an element and the dash and dot lines Z show the forces acting on the vehicle with the use of an element and where also the entire curves and thus the mean forces are elevated. Lines A indicate the mean force value without an elevation, lines B indicate the elevated mean forces values and dashed line C indicates the maximum allowable force due to structural limitations of the power plant.

As can be seen from the upper dotted curve Y, the periods of time when the speed needs to be limited has been reduced or eliminated by the application of the element. Such a solution may be advantageous e.g. when energy is transformed by an actuator or transducer applied to the power plant for producing electrical power. The use of an element can also be used to elevate the curves and increase the mean force values, as can be seen from the upper dash and dot curves Z. Such an elevation of curves and increases of mean forces can be facilitated e.g. by an increase of the wing area or through installation of the power plant in an area with higher flow speeds than otherwise possible. Such an increase of the wing area or flow speeds would in such case be made possible by the decrease of the amplitude of the speed and force variation which in its turn would allow for an increase of the mean forces without increasing the peak forces. In this way, the energy production can be increased as the integral of or area under the power curves will give higher values. This solution is advantageous when the energy is transformed by a turbine and generator mounted on the vehicle.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description are to be regarded as illustrative in nature, and not restrictive. For instance the vehicle 2 does not need to be equipped with a turbine 12 for producing electrical energy. Electrical energy can be produced only by means of the transducer 10 and generator 12. Correspondingly the vehicle may comprise a turbine and generator also in cases where it is not described in such a way.

## Claims

1. Submersible power plant (1) for producing electrical power, the power plant (1) comprising a structure (9) and a vehicle (2) comprising at least one wing (3), the vehicle (2) being arranged to be secured to the structure (9) by means of at least one tether (8); the vehicle (2) being arranged to move in a predetermined trajectory (7) by means of a fluid stream passing the wing (3), the vehicle (2) being arranged to move with a varying speed over the predetermined trajectory (7), **characterized in that** the power plant (1) comprises an element (13) arranged to be attached between the wing (3) and the structure (9), the element being arranged to change or allow change of the distance between the vehicle (2) and the structure (9) continuously over the predetermined trajectory (7), the element thereby reducing the variation in speed of the vehicle (2) over the predetermined trajectory (7), and allowing electrical power to be generated from the variation in distance between the vehicle (2) and the structure (9) by means of a transducer (10), the transducer (10) being arranged to be attached to the power plant (1), wherein the electrical power generated by the transducer is fed to an electricity supply network.

2. Submersible power plant (1) according to claim 1, wherein the transducer (10) comprises the element (13) being arranged to change or allow change of the distance between the vehicle (2) and the structure (9) continuously over the predetermined trajectory (7).

3. Submersible power plant (1) according to claim 1, wherein the transducer (10) is attached to the element (13) being arranged to change or allow change of the distance between the vehicle (2) and the structure (9) continuously over the predetermined trajectory (7).

4. Submersible power plant (1) according to any one of claims 1-3 wherein the power plant (1) comprises an electric linear generator for producing electrical power by converting a translational motion arising from the variation in distance between the vehicle (2) and the structure (9) into electrical energy.

5. Submersible power plant (1) according to any one claims 1-3, wherein the power plant (1) comprises a generator (11) being connected to the transducer (10), the transducer (10) converting a linear motion to a rotational motion that can be converted to electrical energy by a generator (11).

6. Submersible power plant (1) according to any one of the preceding claims, wherein the element comprises one or more of:

   - Compression spiral spring
   - Compression disk spring stack
   - Elastomer spring
   - Gas spring

7. Submersible power plant (1) according to claim 6, wherein the compression spiral spring or compression spring disk stack is made of steel or a composite material.

8. Submersible power plant (1) according to any one of claims 5-7, wherein the transducer (10) comprises one of:

   - Hydraulic piston located in a cylinder, the cylinder being attached to a motor
   - Winch
   - Electrical energy storage

9. Submersible power plant (1) according to any one of the preceding claims, wherein the power plant (1) comprises at least one turbine (12) and turbine generator arranged to be attached to the vehicle (2), wherein the turbine (12) and turbine generator is arranged to generate electrical power by movement of the vehicle (2) over the predetermined trajectory (7) through the fluid.

10. Submersible power plant (1) according to any one of the preceding claims, wherein the power plant (1) comprises means being arranged to control the rate of change in distance between the wing (2) and the structure (9).

11. Submersible power plant (1) according to any one of the preceding claims, wherein the tether (8) or a part of the tether (8) comprises the element (13).

## Patentansprüche

1. Unterwasser-Energieerzeugungsanlage (1) zum Erzeugen von Elektroenergie, wobei die Energieerzeugungsanlage (1) eine Struktur (9) und eine Bewegungsvorrichtung (2) umfasst, die mindestens eine Tragfläche (3) umfasst, wobei die Bewegungsvorrichtung (2) dafür eingerichtet ist, um durch mindestens ein Halteseil (8) an der Struktur (9) befestigt zu werden; die Bewegungsvorrichtung (2) dafür eingerichtet ist, um sich durch einen an der Tragfläche (3) vorbeiströmenden Flüssigkeitsstrom auf einer vorgegebenen Bewegungsbahn (7) zu bewegen, wobei die Bewegungsvorrichtung (2) dafür eingerichtet ist, um sich mit einer sich ändernden Geschwindigkeit über die vorgegebene Bewegungsbahn (7) zu bewegen, **dadurch gekennzeichnet, dass** die Energieerzeugungsanlage (1) ein Element (13) umfasst, das dafür eingerichtet ist, um zwischen der Tragfläche (3) und der Struktur (9) angebracht zu werden, wobei das Element dafür eingerichtet ist, um den Abstand zwischen der Bewegungsvorrichtung (2) und der Struktur (9) über die vorgegebene Bewegungsbahn (7) kontinuierlich zu ändern oder dessen Änderung zuzulassen, wodurch das Element die Änderung der Geschwindigkeit der Bewegungsvorrichtung (2) über die vorgegebene Bewegungsbahn (7) verringert und mittels eines Wandlers (10) eine Erzeugung elektrischer Energie aus der Änderung des Abstands zwischen der Bewegungsvorrichtung (2) und der Struktur (9) ermöglicht, wobei der Wandler (10) dafür eingerichtet ist, um an der Energieerzeugungsanlage (1) angebracht zu werden, wobei die durch den Wandler erzeugte elektrische Energie in ein Elektrizitätsversorgungsnetz eingespeist wird.

2. Unterwasser-Energieerzeugungsanlage (1) nach Anspruch 1, wobei der Wandler (10) das Element (13) umfasst, das dafür eingerichtet ist, um den Abstand zwischen der Bewegungsvorrichtung (2) und der Struktur (9) über die vorgegebene Bewegungsbahn (7) kontinuierlich zu ändern oder dessen Änderung zuzulassen.

3. Unterwasser-Energieerzeugungsanlage (1) nach Anspruch 1, wobei der Wandler (10) an dem Element (13) angebracht ist, das dafür eingerichtet ist, um den Abstand zwischen der Bewegungsvorrichtung (2) und der Struktur (9) über die vorgegebene Bewegungsbahn (7) kontinuierlich zu ändern oder dessen Änderung zuzulassen.

4. Unterwasser-Energieerzeugungsanlage (1) nach einem der Ansprüche 1-3, wobei die Energieerzeugungsanlage (1) einen Elektro-Lineargenerator zum Erzeugen elektrischer Energie umfasst, indem eine aus der Änderung des Abstands zwischen der Bewegungsvorrichtung (2) und der Struktur (9) entstehende Translationsbewegung in elektrische Energie umgewandelt wird.

5. Unterwasser-Energieerzeugungsanlage (1) nach einem der Ansprüche 1-3, wobei die Energieerzeugungsanlage (1) einen mit dem Wandler (10) verbundenen Generator (11) umfasst, wobei der Wandler (10) eine Linearbewegung in eine Drehbewegung umwandelt, die durch einen Generator (11) in elektrische Energie umgewandelt werden kann.

6. Unterwasser-Erzeugungsanlage (1) nach einem der vorhergehenden Ansprüche, wobei das Element eines oder mehrere umfasst aus:

    - Spiraldruckfeder
    - Tellerdruckfederstapel
    - Elastomerfeder
    - Gasdruckfeder

7. Unterwasser-Energieerzeugungsanlage (1) nach Anspruch 6, wobei die Spiraldruckfeder oder der Tellerdruckfederstapel aus Stahl oder einem Verbundwerkstoff hergestellt ist.

8. Unterwasser-Erzeugungsanlage (1) nach einem der Ansprüche 5-7, wobei der Wandler (10) eines umfasst aus:

    - in einem Zylinder angeordnetem Hydraulikkolben, wobei der Zylinder an einem Motor angebracht ist
    - Winde
    - Elektroenergiespeicher

9. Unterwasser-Energieerzeugungsanlage (1) nach einem der vorhergehenden Ansprüche, wobei die Energieerzeugungsanlage (1) mindestens eine Turbine (12) umfasst und der Turbinengenerator dafür eingerichtet ist, um an der Bewegungsvorrichtung (2) angebracht zu werden, wobei die Turbine (12) und der Turbinengenerator dafür eingerichtet sind, um durch Bewegung der Bewegungsvorrichtung (2) über die vorgegebene Bewegungsbahn (7) durch die Flüssigkeit hindurch elektrische Energie zu erzeugen.

10. Unterwasser-Energieerzeugungsanlage (1) nach einem der vorhergehenden Ansprüche, wobei die Energieerzeugungsanlage (1) Mittel umfasst, die dafür eingerichtet sind, um die Änderungsgeschwindigkeit des Abstands zwischen der Tragfläche (2) und der Struktur (9) zu steuern.

11. Unterwasser-Energieerzeugungsanlage (1) nach einem der vorhergehenden Ansprüche, wobei das Halteseil (8) oder ein Teil des Halteseils (8) das Element (13) umfasst.

**Revendications**

1. Centrale électrique submersible (1) pour produire de l'énergie électrique, la centrale électrique (1) comprenant une structure (9) et un véhicule (2) comprenant au moins une aile (3), le véhicule (2) étant agencé pour être fixé à la structure (9) au moyen d'au moins un câble d'attache (8) ; le véhicule (2) étant agencé pour se mouvoir dans une trajectoire prédéterminée (7) au moyen d'un courant de fluide traversant l'aile (3), le véhicule (2) étant agencé pour se mouvoir avec une vitesse variable sur la trajectoire prédéterminée (7), **caractérisée en ce que** la centrale électrique (1) comprend un élément (13) agencé pour être fixé entre l'aile (3) et la structure (9), l'élément étant agencé pour changer ou permettre un changement de la distance entre le véhicule (2) et la structure (9) de façon continue sur la trajectoire prédéterminée (7), l'élément réduisant de ce fait la variation de vitesse du véhicule (2) sur la trajectoire prédéterminée (7) et permettant à de l'énergie électrique d'être générée à partir de la variation de distance entre le véhicule (2) et la structure (9) au moyen d'un transducteur (10), le transducteur (10) étant agencé pour être fixé à la centrale électrique (1), dans laquelle l'énergie électrique générée par le transducteur est alimentée à un réseau d'alimentation électrique.

2. Centrale électrique submersible (1) selon la revendication 1, dans laquelle le transducteur (10) comprend l'élément (13) étant agencé pour changer ou permettre un changement de la distance entre le véhicule (2) et la structure (9) de façon continue sur la trajectoire prédéterminée (7).

3. Centrale électrique submersible (1) selon la revendication 1, dans laquelle le transducteur (10) est fixé à l'élément (13) étant agencé pour changer ou permettre un changement de la distance entre le véhicule (2) et la structure (9) de façon continue sur la trajectoire prédéterminée (7).

4. Centrale électrique submersible (1) selon l'une quelconque des revendications 1 à 3 dans laquelle la centrale électrique (1) comprend un générateur électrique linéaire pour produire de l'énergie électrique en transformant un mouvement de translation découlant de la variation de distance entre le véhicule (2) et la structure (9) en énergie électrique.

5. Centrale électrique submersible (1) selon l'une quelconque des revendications 1 à 3, dans laquelle la centrale électrique (1) comprend un générateur (11) étant connecté au transducteur (10), le transducteur (10) transformant un mouvement linéaire en un mouvement de rotation qui peut être transformé en énergie électrique par un générateur (11).

6. Centrale électrique submersible (1) selon l'une quelconque des revendications précédentes, dans laquelle l'élément comprend un ou plusieurs parmi :

    - un ressort hélicoïdal de compression
    - un empilement de rondelles-ressorts de compression
    - un ressort élastomère

    - un ressort à gaz

7. Centrale électrique submersible (1) selon la revendication 6, dans laquelle le ressort hélicoïdal de compression ou l'empilement de rondelles-ressorts de compression est constitué d'acier ou d'un matériau composite.

8. Centrale électrique submersible (1) selon l'une quelconque des revendications 5 à 7, dans laquelle le transducteur (10) comprend l'un parmi :

    - un piston hydraulique situé dans un cylindre, le cylindre étant fixé à un moteur
    - un treuil
    - un stockage d'énergie électrique

9. Centrale électrique submersible (1) selon l'une quelconque des revendications précédentes, dans laquelle la centrale électrique (1) comprend au moins une turbine (12) et un turbogénérateur agencés pour être fixés au véhicule (2), dans laquelle la turbine (12) et le turbogénérateur sont agencés pour générer de l'énergie électrique par un mouvement du véhicule (2) sur la trajectoire prédéterminée (7) par l'intermédiaire du fluide.

10. Centrale électrique submersible (1) selon l'une quelconque des revendications précédentes, dans laquelle la centrale électrique (1) comprend un moyen étant agencé pour commander le taux de variation de distance entre l'aile (2) et la structure (9).

11. Centrale électrique submersible (1) selon l'une quelconque des revendications précédentes, dans laquelle le câble d'attache (8) ou une partie du câble d'attache (8) comprend l'élément (13).

FIG. 1

FIG. 2

FIG. 3

FIG. 4

FIG. 5

**EP 2 951 426 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009097000 A

15